# EUROPEAN PATENT APPLICATION

(11) **EP 1 903 366 A2**
(43) Date of publication of application: **26.03.2008**
(21) Application number: 07253631.1
(22) Date of filing: 12.09.2007
(51) Int. Cl.: G02B 7/10, G03B 17/04

(54) **Collapsible Lens Barrel**

(30) Priority: 19.09.2006 JP 2006253595
(71) Applicant: Ricoh Company, Ltd., Tokyo 143-8555 (JP)
(72) Inventor: Nuno, Katsuhiko, Tokyo 143-8555 (JP)
(74) Representative: Leeming, John Gerard

(57) **Abstract**

A lens barrel includes: a lens driving apparatus (D3) which holds a stationary frame (3) and which holds a plurality of lens groups (11, 12, 13) such that the lens groups can be moved to predetermined positions in an optical axis direction when rotated; a rotating and moving frame (6) which is included in the lens driving apparatus (D3) and which has a cam groove (6b) at its inner periphery; a linearly moving frame (9) which is arranged on an inner diameter side of the rotating and moving frame (6) and whish has at its outer peripheral a cam follower (9a) which is fitted into the cam groove (6b); and a reinforcing ring (16, 17, 30) which is arranged in an inner diameter direction of the cam follower (9a, 18, 26a) and which has rigidity capable of preventing the cam follower (9a, 18, 26a) from being deformed in the inner diameter direction.

## Description

### BACKGROUND OF THE INVENTION

### Field of the Invention

The present invention relates to an improvement in a lens barrel attached to an image pickup apparatus having a zoom lens mechanism of a digital camera, a video camera, a silver salt camera and the like, and more particularly, to a lens barrel suitable for a zoom lens capable of moving a plurality of lens groups relatively to change a focal length by forwardly and backwardly moving the lens barrel between a collapsed state where the lens groups are accommodated and an extended state where the lens groups extendes to a predetermined position.

### Description of Related Art

As the lens barrel attached to the image pickup apparatus having the zoom lens of the digital camera, the video camera, the silver salt camera and the like, there is known a lens barrel including an image pickup device, a plurality of lenses to form an image of an object of shooting on the image pickup device, and a lens driving apparatus to forwardly and backwardly move the lenses to predetermined positions.
As a lens driving apparatus used for compact cameras of recent years, there is known a lens driving apparatus including one or more rotating and moving frames and one or more linearly moving frames. The rotating and moving frame rotates around a center axis which is in parallel to an optical axis thereby to forwardly and backwardly move in a direction of the optical axis. The linearly moving frame forwardly and backwardly moves in the direction of the optical axis without rotating. The lens driving apparatus is accommodated within a short distance when the camera is not used, and lenses are held at predetermined positions by extending the lens driving apparatus when the camera is used, so that a predetermined focal length is secured.

As cameras are downsized, lens barrels are also downsized rapidly. There is known a multistage telescopic lens barrel which includes lens groups, a plurality of lens holding frames, a plurality of rotating and moving frames, and a stationary cylinder. The lens groups are designed to form an image of an object of shooting on an imaging area. The lens holding frames respectively hold a plurality of lenses. The rotating and moving frames hold and rotate the lens holding frames to move the lens holding frames to predetermined positions in the optical axis direction. The stationary cylinder holds the lens group, the lens holding frames and the rotating and moving frames. In the multistage telescopic lens barrel, the lens groups are moved toward the object of shooting from a collapsed state where the lens groups are accommodated, thereby a shooting state is established.
For downsizing, the multistage collapsed structure has an extremely excellent function to secure a moving distance of a lens, but as the number of stages is increased, a projection area (outer diameter size) of the lens barrel as viewed from the optical axis direction is increased by increase in thickness thereof. Thus, in order to make the projection area smaller, it is necessary to reduce the thickness of cylinder members constituting the multistage. If the cylinder members are made thinner, however, the members are easily be damaged when impact or vibration is applied due to drop or collision, etc.
If a power-on camera falls, a drop impact force is most often applied to a lens holding frame which is most extended toward an object of shooting. At that time, a cam follower which is fitted into a cam groove formed in an inner diameter of a rotation and moving cylinder is arranged on the lens holding frame, and in most of cases, the cam follower comes out from the cam groove with the result that the lens barrel is damaged.

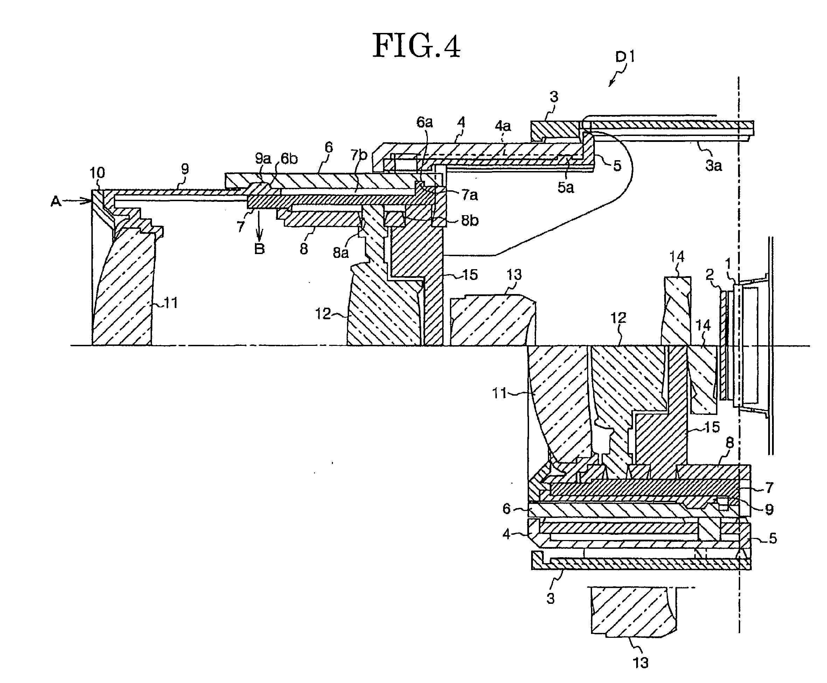

FIG. 4 is a sectional view showing a structure of a lens barrel according to a first conventional example. In FIG. 4, an upper half thereof shows an extended state and a lower half thereof shows a collapsed state.
The lens barrel of the first conventional example includes: an image pickup device 1 arranged on the side of an image pickup apparatus main body such as a digital camera; a first retreating lens holding frame 11, a second lens group 12, a third lens group 13 and a fourth lens group 14 to form an image of an object of shooting on a filter 2 such as LPF; and a lens driving apparatus D1 to forwardly and backwardly move a positional relation of the lens groups 11 to 14 in the optical axis direction.
The lens driving apparatus D1 includes a cylindrical stationary frame 3, a first linearly moving frame 5, a first rotating and moving frame 4, a second rotating and moving frame 6, a second linearly moving frame 7, a third linearly moving frame 9, a cam ring 8, third and fourth lens groups 13 and 14, and a front ornament 10. The cylindrical stationary frame 3 is fixed to the image pickup apparatus main body. The first linearly moving frame 5 is supported by a guide 3a formed on an inner periphery of the stationary frame 3 such that the first linearly moving frame 5 can forwardly and backwardly move linearly in the optical axis direction. The first rotating and moving frame 4 is arranged between the stationary frame 3 and the first linearly moving frame 5 and forwardly and backwardly moves in the optical axis direction when it is rotated. The second rotating and moving frame 6 is arranged on an inner diameter side of the first rotating and moving frame 4 and is supported such that the second rotating and moving frame 6 can rotate to forwardly and backwardly move in the optical axis direction. The second linearly moving frame 7 is arranged inside of the second rotating and moving frame 6 and supported such that the second linearly moving frame 7 can forwardly and backwardly move linearly in the optical axis direction. The third linearly moving frame 9 is arranged between the second rotating and moving frame 6 and the second linearly moving frame 7, and is supported such that it can forwardly and backwardly move linearly in the optical axis direction as well as supports the first lens group 11. The cam ring 8 is arranged inside of the second linearly moving frame 7, and has spiral guides 8a and 8b which respectively support an outer peripheral of the second lens group 12 and an outer peripheral of the shutter aperture 15. The third and forth lens groups 13 and 14 are supported by other holding frames (not shown).

The stationary frame 3 is provided with a plurality of gears and a motor for driving the first rotating and moving frame 4, and an output side of the gear is engaged with the first rotating and moving frame 4. With this, the motor rotates the first rotating and moving frame 4 through the plurality of gears, and forwardly and backwardly moves the third linearly moving frame 9 through the first linearly moving frame 5, the second rotating and moving frame 6 and the second linearly moving frame 7.
The first linearly moving frame 5 is provided at an outer peripheral surface thereof with a cam follower 5a. The cam follower 5a is fitted into a spiral cam groove 4a formed in an inner peripheral surface of the first rotating and moving frame 4. Therefore, if the first rotating and moving frame 4 rotates, the first linearly moving frame 5 can forwardly and backwardly move linearly in the optical axis direction.
The second linearly moving frame 7 has a cam follower 7a at its outer peripheral surface. The cam follower 7a is fitted into a spiral cam groove 6a formed in the inner peripheral surface of the second rotating and moving frame 6. Thus, if the second rotating and moving frame 6 rotates, the second linearly moving frame 7 can forwardly and backwardly move linearly in the optical axis direction.

An inner diameter side of the third linearly moving frame 9 is supported by a linear ahead guide 7b formed on an outer peripheral surface of the second linearly moving frame 7 such that the third linearly moving frame 9 can forwardly and backwardly move. In addition, a cam follower 9a projects from the outer peripheral surface of the third linearly moving frame 9, and the cam follower 9a is fitted into a spiral cam groove 6b formed in an inner peripheral surface of the second rotating and moving frame 6. Thus, if the second rotating and moving frame 6 rotates, the cam follower 9a relatively moves in the optical axis direction along the cam groove 6b. As a result, the third linearly moving frame 9 forwardly and backwardly moves in the optical axis direction.
However, the lens barrel of the first conventional example has the following disadvantage. If a strong force is applied to a front end surface of the third linearly moving frame 9 from the direction of the arrow A, the cam follower 9a of the third linearly moving frame 9 strongly comes into contact with the cam groove 6b formed in the inner diameter of the second rotating and moving frame 6, so that a thrust force is generated on the contact surface. Then, a rear end of the third linearly moving frame 9 presses a front end of the second linearly moving frame 7 in the inner diameter direction shown with the arrow B. Consequently, the cam follower 9a comes out from the cam groove 6b, with the result that the lens barrel may be damaged.

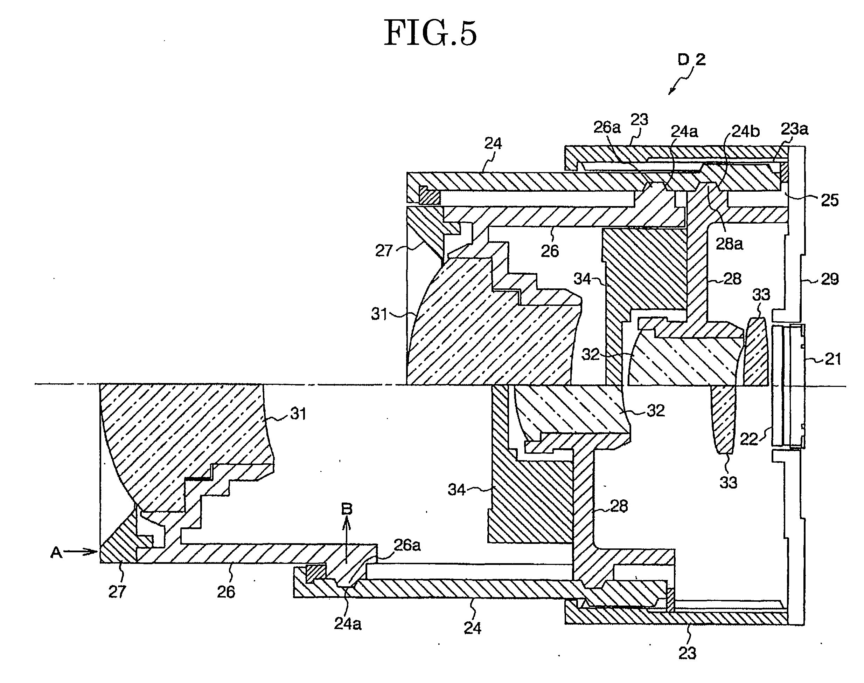

Next, FIG. 5 is a sectional view showing a structure of a lens barrel according to a second conventional example. In FIG. 5, an upper half thereof shows the retracted state and a lower half thereof shows the extending state.
The lens barrel of the second conventional example includes: an image pickup device 21 arranged on the side of an image pickup apparatus main body such as a digital camera; a first lens group 31, a second lens group 32 and a third lens group 33 for forming an image of an object of shooting on a filter 22 such as LPF; and a lens driving apparatus D2 to forwardly and backwardly move a positional relation of the lens groups 31 to 33 in the optical axis direction.
The lens driving apparatus D2 includes a cylindrical stationary frame 23, a first linearly moving frame 25, a first rotating and moving frame 24, a second linearly moving frame 26, a front ornament 27, a lens holding frame 28, a third lens group 33, and a shutter aperture 34. The cylindrical stationary frame 23 is fixed to the image pickup apparatus main body side. The first linearly moving frame 25 is supported by a guide 23a formed in an inner periphery of the stationary frame 23 such that the first linearly moving frame 25 can forwardly and backwardly move linearly in the optical axis direction. The first rotating and moving frame 24 is arranged between the stationary frame 23 and the first linearly moving frame 25 and forwardly and backwardly moves in the optical axis direction when it is rotated. The second linearly moving frame 26 is rotated on the inner diameter side of the first linearly moving frame 25, and is supported such that it can forwardly and backwardly move in the optical axis direction when rotated, as well as supports the first lens group 31. The lens holding frame 28 is arranged inside of the first rotating and moving frame 24 and forwardly and backwardly moves in the optical axis while holding the second lens group 32. The third lens group 33 is held by other holding frames (not shown). The shutter aperture 34 forwardly and backwardly moves together with the lens holding frame 28 in the optical axis direction.

The stationary frame 23 includes a plurality of gears and a motor to drive the first rotating and moving frame 24, and an output side of the gear is engaged with the first rotating and moving frame 24. With this, the motor rotates the first rotating and moving frame 24 through the gear, and forwardly and backwardly moves the first linearly moving frame 25 and the second linearly moving frame 26 in the optical axis direction.
The second linearly moving frame 26 has, at an outer peripheral surface thereof, a cam follower 26a projecting from the outer peripheral surface. The cam follower 26a is fitted into a spiral cam groove 24a formed in the inner periphery of the first rotating and moving frame 24, and thus, when the first rotating and moving frame 24 rotates, the second linearly moving frame 26 can linearly move in the optical axis direction.

The lens holding frame 28 has, at an outer peripheral surface thereof, a cam follower 28a projecting from the outer peripheral surface. The cam follower 28a is fitted into a spiral cam groove 24b formed in an inner periphery of the first rotating and moving frame 24. Therefore, when the first rotating and moving frame 24 is rotated, the lens holding frame 28 can move in the optical axis direction.
The lens barrel of this type has the following disadvantage. If a strong force is applied to a front end surface of the second linearly moving frame 26 from the direction of the arrow A, the cam follower 26a of the second linearly moving frame 26 strongly comes into contact with the cam groove 24a provided on the inner diameter of the first rotating and moving frame 24, so that a thrust force is generated on the contact surface. An end of the second linearly moving frame 26 is pressed in the inner diameter direction shown with the arrow B. Consequently, the cam follower 26a comes out from the cam groove 24a, with the result that the lens barrel may be damaged.

To solve such inconvenience, lens barrels provided with buffer members for eliminating impact and vibration are known from Japanese Patent Application Publications (JP-A) Nos. 2000-292843, 2001-116974, 2003-227992 and 2005-62445.
However, the conventional lens barrel having such a structure for impact resistance has a problem that the shape of the lens barrel becomes large since a double structure comprising a lens holding frame and a barrel frame protecting member must be employed.
Further, since a structure in which the buffer member moves when an external force is applied is employed, there is a problem that a mounting structure for the barrel frame protecting member and the bumper member becomes complicated.

### SUMMARY OF THE INVENTION

The present invention has been accomplished in view of the above conventional problems, and it is an object of the invention to provide a lens barrel which has a simple structure so that it can easily be assembled and it can be made compact in which impact resistance can be enhanced only by adding a small part having a simple structure to the existing lens barrel and the lens barrel can be prevented from being damaged.

In order to accomplish the above object, according to an aspect of the present invention, there is provided a lens barrel including: a plurality of lens groups (11, 12, 13, 14) for producing an image of an object of shooting on an imaging area; a lens driving apparatus (D3) which holds lenses constituting the lens groups (11 to 14), and which brings the lens groups (11 to 14) from a retracted state in which at least a portion of the lens groups (11 to 14) is accommodated to a shooting state by moving at least a portion of the lens groups (11 to 14) toward an object of shooting; a stationary frame (3) for holding the lens driving apparatus (D3); a rotating and moving frame (6, 24) which is included in the lens driving apparatus (D3) and which has a cam groove (6b, 24a) at its image pickup; a linearly moving frame (9, 26) which is included in the lens driving apparatus (D3), the linearly moving frame being arranged on an inner diameter side of the rotating and moving frame (6, 24) and having at its outer peripheral a cam follower (91, 18, 26a) which is fitted into the cam groove (6b, 24a); and a reinforcing ring (16, 17, 30) which is arranged in an inner diameter direction of the cam follower (9a, 18, 26a) and which has rigidity capable of preventing the cam follower (9a, 18, 26a) from being deformed in an inner diameter direction.

### BRIEF DESCIRPTION OF THE DRAWINGS

FIG. 1 is a sectional view showing a structure of a lens barrel according to a first embodiment of the present invention;
FIG. 2 is an enlarged sectional view of an essential portion showing a modification of the first embodiment shown in FIG. 1;
FIG. 3 is a sectional view showing a lens barrel according to anther embodiment of the invention corresponding to a second conventional example;
FIG. 4 is a sectional view showing a structure of a lens barrel according to a first conventional example; and
FIG. 5 is a sectional view showing a structure of a lens barrel according to a second conventional example.

### DETAILED DESCRIPTION OF THE PREFERRED EMBODIMENTS

The present invention will be explained in detail based on embodiments shown in the drawings below.

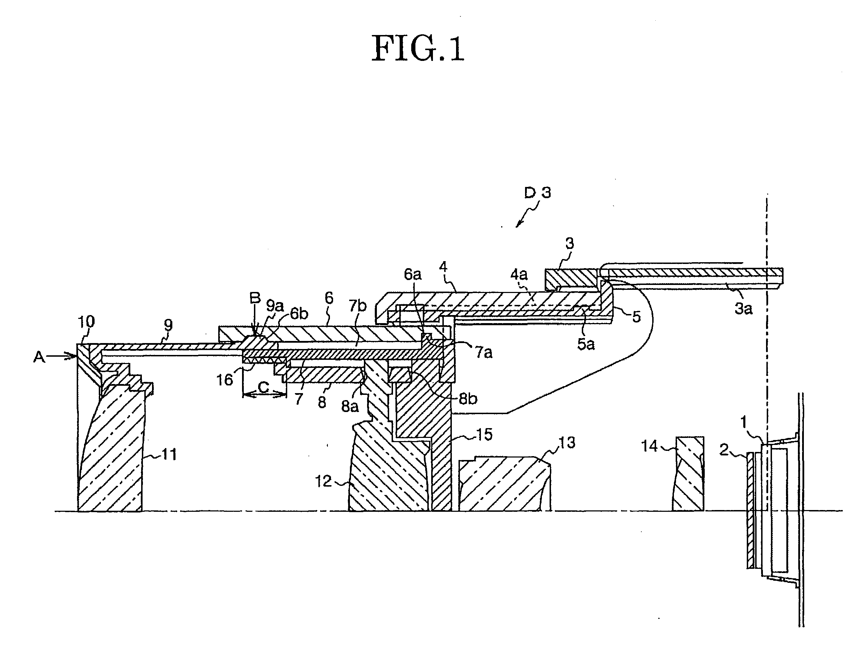

FIG. 1 is a sectional view showing a structure of a lens barrel according to a first embodiment of the present invention. This embodiment corresponds to a first conventional example.
The lens barrel includes: an image pickup device 1 arranged on the side of an image pickup apparatus main body such as a digital camera; a first lens group 11, a second lens group 12, a third lens group 13 and a fourth lens group 14 for forming an image of an object of shooting on a filter 2 such as an LPF; and a lens driving apparatus D3 for forwardly and backwardly moving a positional relation of the lens groups 11 to 14.

The lens driving apparatus D3 includes a cylindrical stationary frame 3, a first linearly moving frame 5, a first rotating and moving frame 4, a second rotating and moving frame 6, a second linearly moving frame 7, a third linearly moving frame 9, a cam ring 8, third and fourth lens groups 13 and 14, and a front ornament 10. The cylindrical stationary frame 3 is fixed to the image pickup apparatus main body. The first linearly moving frame 5 is supported by a guide 3a formed on an image pickup of the stationary frame 3 such that the first linearly moving frame 5 can forwardly and backwardly move linearly in the optical axis direction. The first rotating and moving frame 4 is arranged between the stationary frame 3 and the first linearly moving frame 5 and forwardly and backwardly moves in the optical axis direction when it is rotated. The second rotating and moving frame 6 is arranged on the inner diameter side of the first rotating and moving frame 4, and is supported such that the second rotating and moving frame 6 can forwardly and backwardly move in the optical axis when rotated. The second linearly moving frame 7 is arranged inside of the second rotating and moving frame 6, and is supported such that the second linearly moving frame 7 can forwardly and backwardly move linearly in the optical axis direction. The third linearly moving frame 9 is arranged between the second rotating and moving frame 6 and the second linearly moving frame 7, and is supported such that the third linearly moving frame 9 can forwardly and backwardly move linearly in the optical axis direction as well as supports the first lens group 11. The cam ring 8 is arranged inside of the second linearly moving frame 7, and has spiral guides 8a and 8b for respectively supporting an outer periphery of the second lens group 12 and an outer periphery of the shutter aperture 15. The third and fourth lens groups 13 and 14 are supported by other holding frames (not shown). The front ornament 10 is arranged on a front end of the third linearly moving frame 9.

The stationary frame 3 is provided with a plurality of gears (not shown) and a motor (not shown) for driving the first rotating and moving frame 4, and an output side of the gear is engaged with the first rotating and moving frame 4. With this, the motor (not shown) rotates the first rotating and moving frame 4 through the plurality of gears (not shown), and forwardly and backwardly moves the third linearly moving frame 9 through the first linearly moving frame 5, the second rotating and moving frame 6 and the second linearly moving frame 7.
The first linearly moving frame 5 has a cam follower 5a at an outer peripheral surface thereof. The cam follower 5a is fitted into a spiral cam groove 4a formed in an inner peripheral surface of the first rotating and moving frame 4. Therefore, if the first rotating and moving frame 4 rotates, the first linearly moving frame 5 can forwardly and backwardly move linearly in the optical axis direction.
The second linearly moving frame 7 has a cam follower 7a at its outer peripheral surface. The cam follower 7a is fitted into a spiral cam groove 6a formed in the inner peripheral surface of the second rotating and moving frame 6. Thus, if the second rotating and moving frame 6 rotates, the second linearly moving frame 7 can forwardly and backwardly move linearly in the optical axis direction.

An inner diameter side of the third linearly moving frame 9 is supported by a straight ahead guide 7b formed on an outer peripheral surface of the second linearly moving frame 7 such that the third linearly moving frame 9 can forwardly and backwardly move. In addition, a cam follower 9a projects from the outer peripheral surface of the third linearly moving frame 9, and the cam follower 9a is fitted into a spiral cam groove 6b formed in an inner peripheral surface of the second rotating and moving frame 6. Thus, if the second rotating and moving frame 6 rotates, the cam follower 9a relatively moves in the optical axis direction along the cam groove 6b, and as a result, the third linearly moving frame 9 forwardly and backwardly moves in the optical axis direction.
A structure of the lens barrel of the embodiment is characterized in that a thin plate-like metal ring 16 is arranged on an inner peripheral surface of the second linearly moving frame 7 at a position corresponding to a fitting portion between the cam follower 9a and the cam groove 6b when the lens barrel is extended as shown in the drawing. In particular, it is preferable that a positional relation and a size relation are set such that at least a portion of the cam follower 9a is located within a range C of the metal ring 16 in the optical axis direction. In this embodiment, the entire cam follower 9a falls within the range C.

In this embodiment of the invention, an external force in the direction of the arrow A such as an impact is applied to a front end of the third linearly moving frame 9 in the optical axis direction, and accordingly, a force may act on an outer surface of the cam follower 9a from an inner wall of the cam groove 6b in the direction of the arrow B. Even in this case, the rigidity of the metal ring 16 arranged on the image pickup of the second linearly moving frame 7 prevents the front end of the second linearly moving frame 7 and a rear end of the third linearly moving frame 9 from being deformed in the direction of the arrow B. Therefore, it is possible to prevent the cam follower 9a from coming out from the cam groove 6b and to prevent the lens barrel from being disassembled.
Further, since the cam follower 9a is arranged within the range C in the optical axis direction where the metal ring 16 is arranged, the destroy-preventing effect of the lens barrel by preventing deformation can further be enhanced.

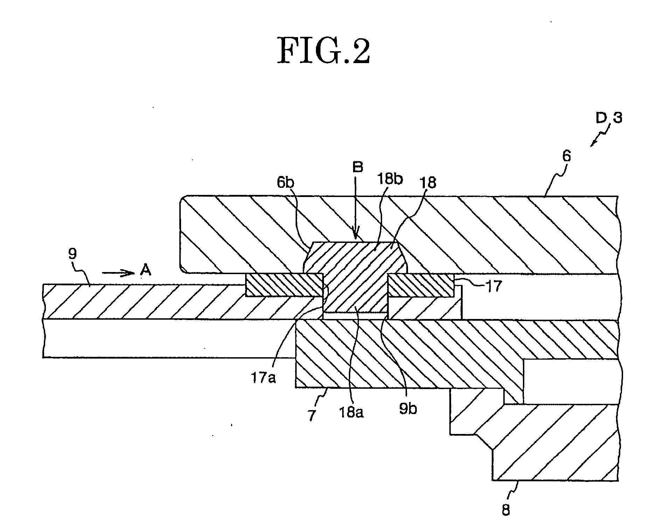

Next, FIG. 2 is an enlarged sectional view of an essential portion showing a modification of the first embodiment shown in FIG. 1.
According to the lens barrel of this embodiment, a cam follower 18 as a separate member is provided at the same location of the third linearly moving frame 9 instead of integrally providing the projecting cam follower 9a on the outer peripheral surface of the third linearly moving frame 9. That is, a base 18a of the cam follower 18 is fixed to an inside of the support hole 9b formed in the third linearly moving frame 9, and a tip end (sliding surface) 18b of the cam follower 18 is fitted into a spiral cam groove 6b formed in the inner peripheral surface of the second rotating and moving frame 6. In addition, a metal ring 17 is arranged on an outer peripheral surface of the third linearly moving frame 9 at a location corresponding to the cam follower 18.
More specifically, in this embodiment, the metal ring 17 is fixed to an appropriate location of the outer peripheral surface of the third linearly moving frame 9, and a base 18a of the cam follower 18 is inserted through an insertion hole 17a of the metal ring 17, so that the metal ring 17 is fixed. The base 18a of the cam follower 18 passes through the insertion hole 17a formed in the metal ring 17 and the base 18a projects toward the inner diameter. The base 18a is fitted to the support hole 9b formed in the third linearly moving frame 9, thereby restricting the relative movement between the third linearly moving frame 9 and the cam follower 18 in the rotation direction.
With this, even if a force in the direction of the arrow B acts on the cam follower 18, the rigidity of the metal ring 17 prevents the cam follower 18 from being displaced in the direction of the arrow B since the cam follower 18 is arranged on the metal ring 17. Even if a force in the direction of the arrow A acts on the third linearly moving frame 9, the metal ring 17 and the cam follower 18 do not relatively rotate since the relative movement between the third linearly moving frame 9 and the cam follower 18 in the rotation direction is restricted.

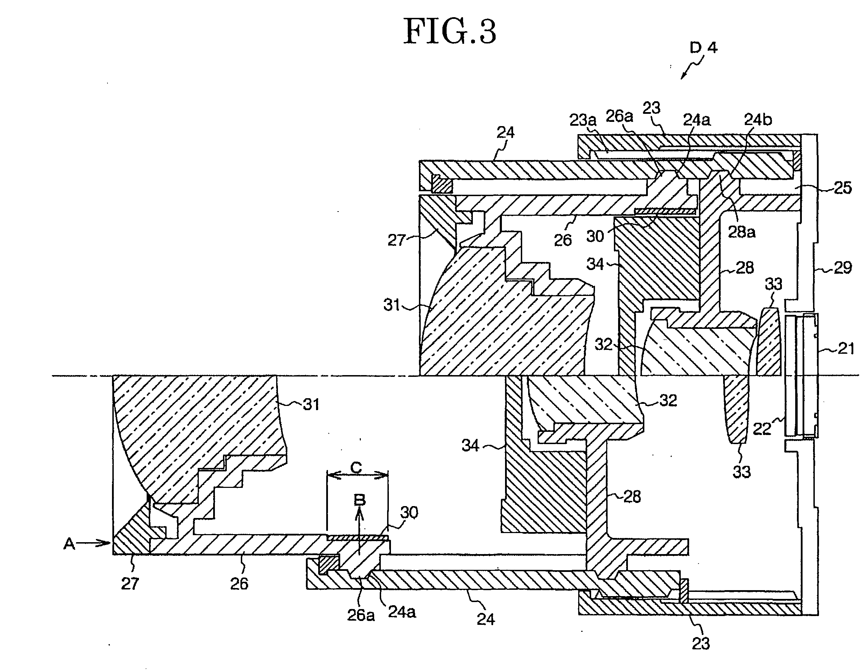

Next, FIG. 3 is a sectional view showing a structure of a lens barrel according to anther embodiment of the invention corresponding to a second conventional example, where an upper side thereof shows an accommodated or collapsed state and a lower side thereof shows an extended state.
The lens barrel of this embodiment includes: an image pickup device 21 arranged on the side of an image pickup apparatus main body such as a digital camera; a first lens group 31, a second lens group 32 and a third lens group 33 for forming an image of an object of shooting on a filter 22 such as PLE; and a lens driving apparatus D4 for forwardly and backwardly moving a positional relation of the lens groups 31 to 33 in the optical axis direction.

The lens driving apparatus D4 includes a cylindrical stationary frame 23, a first linearly moving frame 25, a first linearly moving frame 24, a second linearly moving frame 26, a front ornament 27, a lens holding frame 28, a third lens group 33, and a shutter aperture 34. The cylindrical stationary frame 23 is fixed to the image pickup apparatus main body. The first linearly moving frame 25 is supported by a guide 23a formed on an image pickup of the stationary frame 23 such that the first linearly moving frame 25 can forwardly and backwardly move linearly in the optical axis direction. The first linearly moving frame 24 is arranged between the stationary frame 23 and the first linearly moving frame 25, and forwardly and backwardly moves in the optical axis direction when it is rotated. The second linearly moving frame 26 is arranged on the side of an inner diameter of the first linearly moving frame 25, and is supported such that the second linearly moving frame 26 can forwardly and backwardly move in the optical axis direction when rotated, as well as supports the first lens group 31. The front ornament 27 is arranged on the front end of the second linearly moving frame 26. The lens holding frame 28 is arranged inside of the first rotating and moving frame 24 and behind the second linearly moving frame 26 to hole the second lens group 32 and forwardly and backwardly moves in the optical axis. The third lens group 33 is held by another holding frame (not shown). The shutter aperture 34 forwardly and backwardly moves in the optical axis together with the lens holding frame 28.

The stationary frame 23 includes a plurality of gears (not shown) and a motor (not shown) to drive the first rotating and moving frame 24, and an output side of the gear (not shown) is engaged with the first rotating and moving frame 24. With this, the motor (not shown) rotates the first rotating and moving frame 24 through the gear (not shown), and forwardly and backwardly moves the first linearly moving frame 25 and the second linearly moving frame 26 in the optical axis direction.
The second linearly moving frame 26 has, at its outer peripheral surface, a cam follower 26a projecting from the outer peripheral surface. The cam follower 26a is fitted into a spiral cam groove 24a formed in the inner periphery of the first rotating and moving frame 24 and thus, when the first rotating and moving frame 24 rotates, the second linearly moving frame 26 can linearly move in the optical axis direction.
The lens holding frame 28 has, at its outer peripheral surface, a cam follower 28a projecting from the outer peripheral surface. The cam follower 28a is fitted into a spiral cam groove 24b formed in an inner periphery of the first rotating and moving frame 24. Therefore, when the first rotating and moving frame 24 is rotated, the lens holding frame 28 can move in the optical axis direction.

A structure of the lens barrel of the embodiment is characterized in that a thin plate-like metal ring 30 is arranged on an inner peripheral surface of the second linearly moving frame 26 at a position corresponding to a fitting portion between the cam follower 26a and the cam groove 24a when the lens barrel is extended as shown in the drawing. In particular, it is preferable that a positional relation and a size relation are set such that at least a portion of the cam follower 26a is located within a range C of the metal ring 30 in the optical axis direction. In this embodiment, the entire cam follower 26a falls within the range C.
In this embodiment of the invention, an external force in the direction of the arrow A such as an impact is applied to a front end of the second linearly moving frame 26 in the optical axis direction, and accordingly a force may act on an outer surface of the cam follower 26a from an inner wall of the cam groove 24a in the direction of the arrow B. Even in which case, the rigidity of the metal ring 30 arranged on the image pickup of the second linearly moving frame 26 prevents the rear end of the second linearly moving frame 26 from being deformed in the direction of the arrow B. Therefore, it is possible to prevent the cam follower 26a from coming out from the cam groove 24a and to prevent the lens barrel from being disassembled.
Further, since the cam follower 26a is arranged within the range C in the optical axis direction where the metal ring 30 is arranged, the destroy-preventing effect of the lens barrel by preventing deformation can further be enhanced.
According to the embodiment of the invention as described above, the lens barrel includes the rotating and moving frame having the cam groove at its image pickup, and the linearly moving frame which is arranged on the side of the id of the rotating and moving frame, the linearly moving frame having, at its outer peripheral, the cam follower which is fitted into the cam groove. In the lens barrel, a reinforcing ring having rigidity capable of preventing the cam follower from being deformed in the inner diameter direction is arranged in the inner diameter direction of the cam follower. Accordingly, it is possible to provide a lens barrel which has a simple structure so that it can easily be assembled and it can be made compact in which impact resistance can be enhanced only by adding a small part having a simple structure to the existing lens barrel and the lens barrel can be prevented from being damaged.
Although in the embodiment, the metal rings 16, 17 and 30 are shown as the reinforcing ring, the reinforcing ring is not limited to the metal ring as long as the ring has necessary rigidity. Other materials such as resin including carbon and Kevlar fiber may also be used.

An image pickup apparatus having a strong impact resistance can be provided if the lens barrel of the invention is applied to a digital camera, a video camera, a silver salt camera or an image pickup apparatus having a zoom barrel.

## Claims

1. A lens barrel including:
a plurality of lens groups (11, 12, 13, 14) to produce an image of an object of shooting on an imaging area;
a lens driving apparatus (D3) which holds lenses constituting the lens groups (11 to 14), and brings the lens groups (11 to 14) from a collapsed state in which at least a portion of the lens groups (11 to 14) is accommodated to a shooting-state by moving at least a portion of the lens groups (11 to 14) toward an object of shooting,
a stationary frame (3) to hold the lens driving apparatus (D3);
a rotating and moving frame (6, 24) which is included in the lens driving apparatus (D3) and which has a cam groove (6b, 24a) at its image pickup;
a linearly moving frame (9, 26) which is included in the lens driving apparatus (D3), the linearly moving frame being arranged on an inner diameter side of the rotating and moving frame (6, 24) and having at an outer peripheral thereof a cam follower (91, 18, 26a) which is fitted into the cam groove (6b, 24a); and
a reinforcing ring (16, 17, 30) which is arranged in an inner diameter direction of the cam follower (9a, 18, 26a) and has rigidity capable of preventing the cam follower (9a, 18, 26a) from being deformed in an inner diameter direction.

2. The lens barrel according to claim 1, **characterized in that** the ring (16, 17, 39) is made of metal.

3. The lens barrel according to claim 1 or 2, **characterized in that** the lens driving apparatus (D3) includes another linearly moving frame (7) arranged on an inner diameter side of the linearly moving frame (9), and the ring (16) is arranged on an image pickup of the another linearly moving frame (7).

4. The lens barrel according to claim 1 or 2, **characterized in that** the ring (17) is arranged on an outer periphery of the linearly moving frame (9), and
the cam follower (18) is formed as a separate member independent from the linearly moving frame (9) and the ring (17), and is fixed and arranged in a state of being inserted through the linearly moving frame (9) and the ring (17).

5. The lens barrel according to claim 4, **characterized in that** the cam follower (18) is fitted into and arranged in a hold (9b) formed in an outer peripheral surface of the linearly moving frame (9) that the ring (17) is arranged.

6. The lens barrel according to any one of claims 1 to 5, **characterized in that** the linearly moving frame (9) having the ring (17) is a linearly moving frame (9) that most extends toward the object of shooting.

7. The lens barrel according to any one of claims 1 to 5, **characterized in that** the linearly moving frame (7) having the ring (16) is a linearly moving frame (7) that extends toward the object of shooting next to the linearly moving frame (9) that most extends toward the object of shooting.

8. The lens barrel according to any one of claims 1 to 4, **characterized in that** the metal ring (16, 17, 30) includes, within its width in its axial direction, at least a portion of the cam follower (9a, 18, 26a) located on an outer diameter side.
